(19) Europäisches Patentamt
European Patent Office
Office européen des brevets

(11) Publication number: **0 184 400**
**A2**

(12) **EUROPEAN PATENT APPLICATION**

(21) Application number: 85308705.4

(22) Date of filing: 29.11.85

(51) Int. Cl.⁴: **A 01 K 39/024**
**A 01 K 7/04**

(30) Priority: 29.11.84 GB 8430179

(43) Date of publication of application:
11.06.86 Bulletin 86/24

(84) Designated Contracting States:
AT BE CH DE FR GB IT LI NL SE

(71) Applicant: Broiler Equipment Co. Limited
Winnal
Winchester Hampshire SO23 7SB(GB)

(72) Inventor: Forster, Roy Edwin
7 The Retreat Englefield Green
Egham Surrey TW20 0JH(GB)

(74) Representative: Robinson, Anthony John Metcalf et al,
Kilburn & Strode 30 John Street
London, WC1N 2DD(GB)

(54) Drinkers.

(57) A wet cup drinker for birds has vertical inlet tube (1) with an inlet (10) at the top and carrying a trough (3) at the bottom. A horizontal tube (12) branches from the vertical tube and has its outer end closed by a wall having an aperture (25) through which passes a closure member (15). An open-bottomed float (29) surrounds and slides on the vertical tube (1) and has on its inner periphery a cam surface (36) which engages a cam follower surface (18) on the valve closure member (15). The water level in the trough is maintained approximately constant.

FIG. 1.

## DRINKERS

This invention relates to drinkers, more particularly wet cup drinkers, for chicks, chickens or other birds.

A wet cup drinker is a drinker in which water is always present in the drinker with an open surface accessible to the birds. This invention relates to wet cup drinkers as opposed to dry cup drinkers where water is supplied only on demand.

Dry cup drinkers are known which are operated by a nipple valve but these have the disadvantage that water is not normally present and is only supplied on demand. The chicks or other birds must therefore learn to operate the drinker and only one chick can drink from each nipple operated supply point at any one time. Such drinkers are very sensitive to water pressure.

Wet cup drinkers are known using means controlling a valve to maintain an approximately constant water level. Thus GB-A-325 642 describes a wet cup drinker for birds comprising a water trough, a water inlet and a valve between the inlet and the trough operated by a float to maintain the water level in the trough approximately constant. This drinker has an inlet at the bottom with a stem extending upwardly to a valve which is controlled by a float which slides on the stem. GB-A-1 236 234 also describes a wet cup drinker having a float operated valve but again the inlet is situated at the bottom. There are substantial disadvantages in having the inlet at the bottom. Firstly this requires water supply facilities either permanently installed in the floor of the bird house or laid on the surface of the floor. In either case the provision of the water supply at floor level will complicate cleaning of the floor, a necessary but troublesome operation even with a smooth and uninterrupted floor. Also the arrangements described in the two British patent specifications to which reference has been made with their inlets at the bottom are such that the height of the water level above the floor of the house is substantial and this is unsatisfactory for young chicks. In addition the supply of water from beneath the drinker makes it extremely difficult, if not impossible, for the drinker to be readily lifted clear of the floor area of the house for cleaning of the floor and of the drinker, this being desirable in modern bird house practice.

GB-A-1 559 746 describes a wet cup drinker which has an inlet at the top and which does not therefore suffer from the disadvantages to drinkers having inlets at the bottom but in this construction the valve is located at a substantial height above the water level and requires a tall stem above the level of the valve thus producing a drinker having a considerable overall height so that head room is restricted when the drinkers are elevated. Moreover the valve is of complex construction and the drinker while being satisfactory is nevertheless expensive.

According to the present invention a wet cup drinker for birds comprising a water trough, a water inlet and a valve between the inlet and the trough operated by a float to maintain the water level in the trough approximately constant is characterised by a vertical inlet passage having the said water inlet at the top, a horizontal inlet passage branching from the vertical passage, and an outlet from the horizontal passage, the valve being located in the outlet.

The invention thus provides a construction of drinker having an inlet at the top but which can be constructed to provide a water level close to floor level when required, a drinker which can be of low overall height and which can be suspended and raised up and which can be of simple and inexpensive construction.

In a preferred arrangement the vertical inlet passage is formed by a vertical tube having the water inlet at the top, the horizontal inlet passage is formed by a horizontal tube branching from the vertical tube near the bottom thereof, the outer end of the horizontal tube has a transverse wall with an aperture therein, the valve is formed by a valve closure member extending through the aperture with a valve disk on the inner end and a cam follower surface on the outer end, and the float is an open bottomed vessel surrounding and sliding vertically on the vertical tube and carrying a cam surface engageable with the cam follower surface to operate the valve.

The invention may be carried into practice in various ways but one wet cup drinker embodying the invention will now be described by way of example with reference to the accompanying drawings, in which:

Figure 1 is a vertical section of the drinker with the trough  of the drinker empty;

Figure 2 is a vertical section similar to Figure 1 but with the trough filled to its maximum depth;

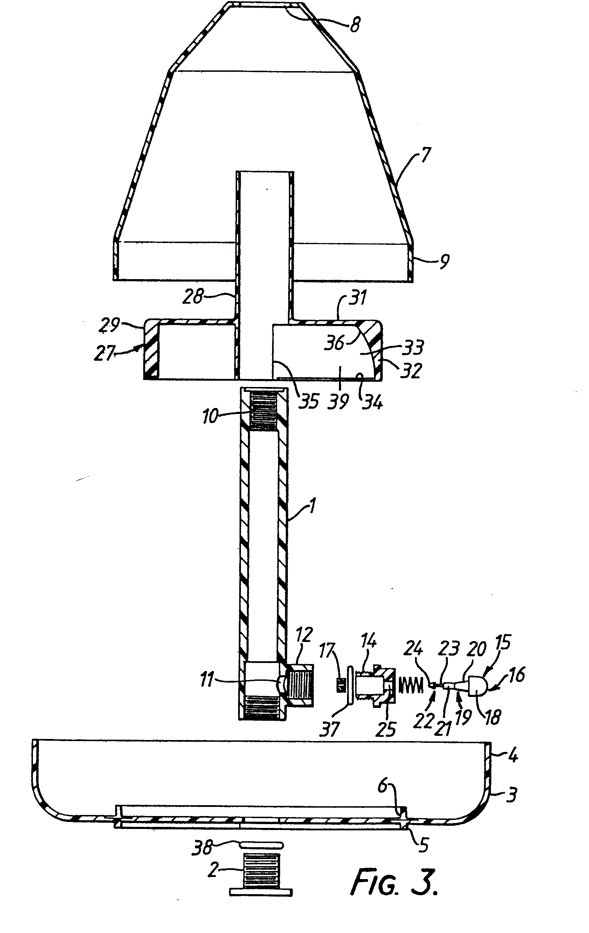

Figure 3 is an exploded vertical section;

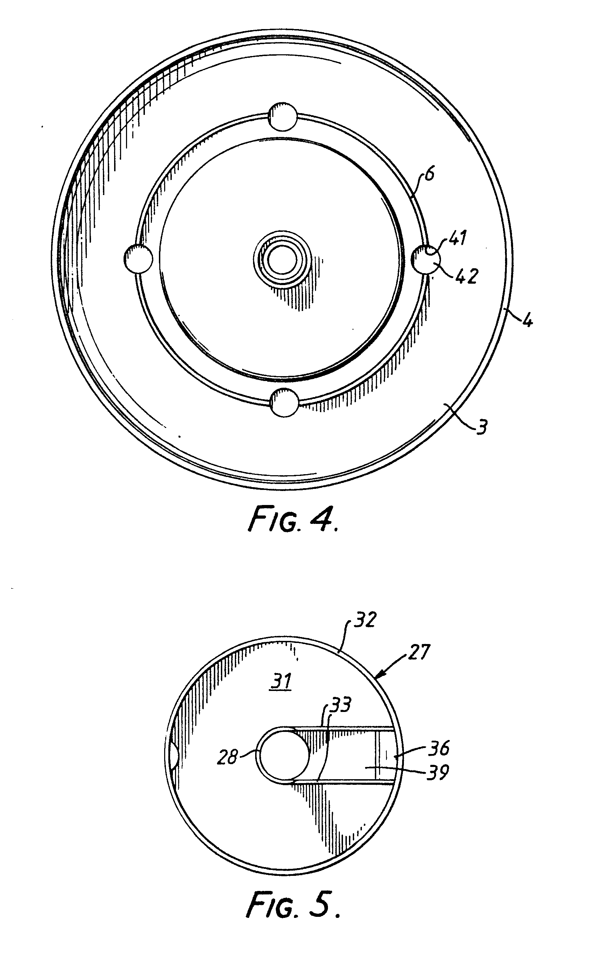

Figure 4 is a plan view of the trough member; and

Figure 5 is an inverted plan view of the float member of the drinker.

The drawings show a wet cup drinker the components of which (with the exception of rubber O-rings and a spring) are plastics mouldings.  The drinker is intended to be located at the lower end of a flexible water supply pipe which is connected by a threaded connector (not shown) to the threaded upper end 10 of a central inlet pipe 1.  The upper end 10 of the inlet pipe 1 thus forms the water inlet to the drinker. The lower end of the inlet pipe 1 is closed by a threaded plug 2.  The plug retains on the lower end of the inlet pipe 1 a trough member 3 which is in the form of a shallow dish having an upturned rim 4, a low circular rib 5 on the underside and a slightly higher circular rib 6 on the upper side.  An inverted generally conical cover member 7 has a central aperture 8 which fits snugly around the inlet pipe 1 and a lower rim 9 which fits firmly around the upper rib 6 on the trough member 3. The upper rib 6 is interrupted at four evenly spaced locations around its circumference by gaps 41 which are aligned with recesses 42 in the upper surface of the trough member 3. Thus, when the cover member 7 is fitted over the rib 6, communication between the space within the cover member 7 and the part of the trough member 3 outside the cover member is provided through the recesses 42.

Adjacent the lower end of the inlet pipe 1 there is a hole 11 which leads into a short, laterally extending, horizontal branch pipe 12 whose outer end is closed by a valve 13. The valve comprises a cup-shaped seat member 14 which is screwed into the end of the branch pipe 12 and a valve closure member 15. The closure member 15 consists of a main part 16 and a disk member 17. The main part 16 comprises a dome-shaped head 18, a stem 19 having a gently tapering part 20 and a cylindrical part 21, and a barb portion 22 having a thin stem part 23 and an arrow-shaped head 24. The disk member 17 is made of an elastomeric plastics material and is in the form of a thick disk having a hole in the middle through which the head 24 of the main part 16 of the closure member 15 can be passed. The seat member 14 has a central aperture 25 in its base through which the stem 19 of the main part 16 can be passed with clearance and the valve includes a compression spring 26 which can loosely surround the stem 19.

The drinker includes a float member 27 which consists of a sleeve portion 28 which is loosely slidable on the outside of the inlet pipe 1 and a float portion 29 which is formed essentially by a disc or flange 31 extending radially outwards from the sleeve portion 28 part way up its height and a cylindrical outer wall 32 extending downwardly from the periphery of the disc 31 to a rim level with the bottom of the inlet pipe 1. A pair of parallel vertical walls 33 extend tangentially from the inlet pipe 1 to the outer wall 32, the upper edges of the walls 33 merging into the underside of the disc 31 and the lower edges 34 being spaced a small distance above the level of the lower rim of the cylindrical wall 32. The parallel walls bound an inlet chamber 39 the radially inner end of which is open to the interior of the inlet pipe 1 through an opening 35 and the outer end of which is shaped to provide a cam surface 36 to be engaged by the head 18 of the valve closure member 15.

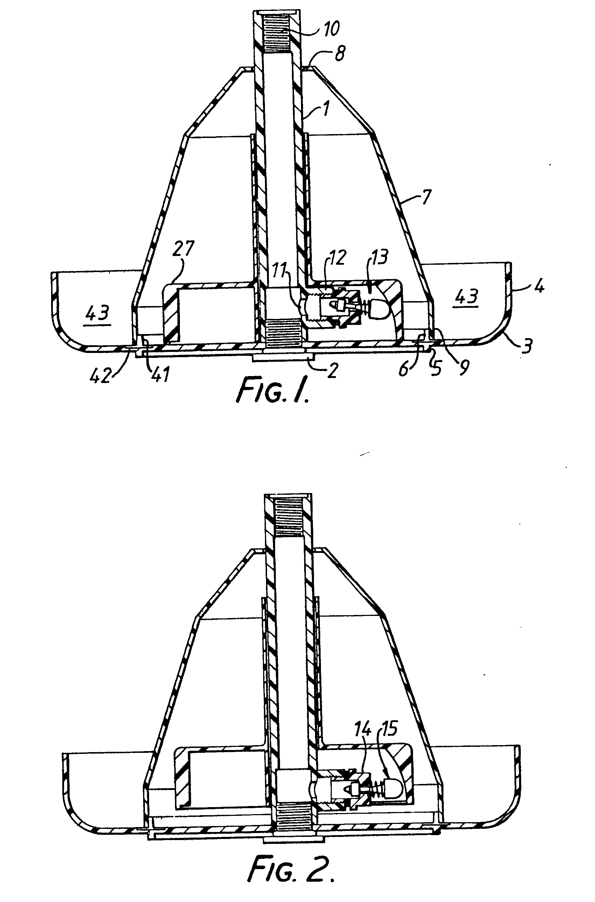

The operation of the drinker will be described after a description of its assembly. Firstly, the valve 13 is assembled by passing the spring 26 over the stem 19 of the main part 16 of the closure member 15, passing the stem through the aperture 25 in the seat member 14 and passing the disk member 17 over the head 24, thus retaining the complete closure member 15 on the seat member 14. The seat member 14 is then screwed into the end of the branch pipe 12 with the interposition of an O-ring 37. The inlet tube 1 is then attached to the trough member 3 by means of the plug 2 (with the interposition of an O-ring 38). The float member 27 is then lowered over the inlet tube 1 so that the branch pipe 12 and the valve 13 are received in the inlet chamber 38 with the dome-shaped head 18 adjacent or engaging the cam surface 36. The cover 7 is then lowered over the inlet pipe 1 until its lower rim 9 is pressed over the rib 6 on the trough member 3. The drinker is now ready to be connected to the lower end of a water supply pipe which will be so arranged that the drinker is suspended just above the floor of a poultry house or just rests on the floor. When the drinker is empty of water as is shown in Figure 1 the float member 27 will be in its lowest position resting with its lower rim on the trough member 3. In this position, the cam surface 36 engages the domed head 18 of the valve closure member 15 to tilt the valve closure member, thus tilting the disk member 17 so that for at least the majority of its periphery it is separated from the inner end surface of the valve seat member 14. It is possible that, in addition to tilting, the valve closure member 15 may be moved bodily by the cam surface radially inwards towards the central vertical axis of the drinker, thus separating the disk member 17 from the seat member 14 around its complete periphery. The spacing between the disk member 17 and the valve seat member 14 allows water to flow from the inlet pipe 1 through the valve into the inlet chamber 39 whence it flows out from under the float member 27 and through the recesses 42 in the trough member 3 into the trough 43 formed between the cover member 7 and the rim of the trough member 3.

As the level of water in the trough 43 rises, the float member 27 rises from the position shown in Figure 1 to that shown in Figure 2.  It will be seen that the cam surface 36 has moved to allow the spring 26 and water pressure to reseat the disk member 27 firmly against the valve seat 14 to close the valve and stop the inflow of water.  When the water level subsequently falls, because of evaporation or consumption, the float member 27 will again fall and the valve will again be opened.  Thus, the water level in the trough 43 will be maintained approximately constant.

Where the water pressure is adequate, the spring 26 may be unnecessary.  The water level maintained in the trough 43 can be adjusted by substituting an O-ring 38 of different thickness and/or screwing the valve seat member 14 a different  distance into the branch tube 12.

Provision may be made for raising the drinker up towards the roof of the house in which it is located by pulling the drinker up on the water supply line to which it is connected.

## CLAIMS

1.    A wet cup drinker for birds comprising a water trough (3), a water inlet (10), and a valve (13) between the inlet and the trough operated by a float (27) to maintain the water level in the trough approximately constant, characterised by a vertical inlet passage (1) having the said water inlet (10) at the top, a horizontal inlet passage (12) branching from the vertical passage, and an outlet (25) from the horizontal passage, the valve (13) being located in the outlet.

2.    A drinker according to Claim 1 characterised in that the float (27) carries a cam surface (36) and the valve has a valve closure element (17) connected to a cam follower (18) engageable with the cam surface.

3.    A drinker according to Claim 2 characterised in that the horizontal passage has a wall with an aperture (25) therethrough, the valve closure element (17) is at one end of a valve closure member (15) which extends through the aperture, and the cam follower (18) is at the other end of the valve closure member.

4.    A drinker according to Claim 3 characterised in that the valve closure member (15) is tiltable in the aperture (25) to open the valve by action of the cam surface (36) on the cam follower (18).

5.    A drinker according to Claim 2 or Claim 3 or Claim 4 characterised in that the vertical inlet passage is formed by a vertical tube (1), the float (27) surrounds the vertical tube and the horizontal inlet passage (12) and the valve (13) are located within the float.

6.    A drinker according to Claim 5 characterised in that the float includes a pair of internal walls (33) located one on each side of the valve and the cam surface (36) is located on the inner peripheral surface of the float (29) between the two walls.

7.    A drinker according to Claim 1 characterised in that the vertical inlet passage is formed by a vertical tube (1) having the water inlet (10) at the top, the horizontal inlet passage is formed by a horizontal tube (12) branching from the vertical tube near the bottom thereof, the outer end of the horizontal tube has a transverse wall with an aperture (25) therein, the valve is formed by a valve closure member (15) extending through the aperture with a valve disk (17) on the inner end and a cam follower surface (18) on the outer end, and the float (27) is an open bottomed vessel surrounding and sliding vertically on the vertical tube and carrying a cam surface (36) engageable with the cam follower surface (18) to operate the valve.

8.   A wet cup drinker for birds comprising a
water trough (3), a float (27) in the trough, a
water inlet (10), and a valve (13) operated by the
float and controlling flow from the inlet into the
trough, characterised in that:   the float (27) has
a closed top (31), a peripheral wall (32), and a
cam surface (36) formed by a portion of the peripheral
wall; the valve (13) is located within the float (27)
and has a valve closure element (17) connected to a
cam follower (18) engaging the cam surface (36);
and the water inlet (10) is located at a level above
the float (27).

9.   A drinker according to Claim 8 characterised
by a vertical inlet tube (1) having the water inlet
(10) at the top and secured to the trough (3) at the
bottom, the float (27) sliding on the inlet tube (1).

0184400

FIG. 1.

FIG. 2.

FIG. 3.

FIG. 4.

FIG. 5.